(19) Europäisches Patentamt
European Patent Office
Office européen des brevets

(11) Veröffentlichungsnummer : **0 352 478 B1**

(12) # EUROPÄISCHE PATENTSCHRIFT

(45) Veröffentlichungstag der Patentschrift :
**17.03.93 Patentblatt 93/11**

(51) Int. Cl.$^5$ : **B01D 15/08**

(21) Anmeldenummer : **89111442.3**

(22) Anmeldetag : **23.06.89**

(54) **Verfahren zur Trennung von in wässriger oder wässrig/organischer Lösung enthaltenen Substanzgemischen.**

(30) Priorität : **30.06.88 DE 3822036**

(43) Veröffentlichungstag der Anmeldung :
**31.01.90 Patentblatt 90/05**

(45) Bekanntmachung des Hinweises auf die Patenterteilung :
**17.03.93 Patentblatt 93/11**

(84) Benannte Vertragsstaaten :
**DE FR GB**

(56) Entgegenhaltungen :
**EP-A- 0 103 845**
**PATENT ABSTRACTS OF JAPAN vol. 7, no. 242 (C-192)(1397) 27 Oktober 1983**
**PATENT ABSTRACTS OF JAPAN vol. 4, no. 149 (P-32)(631) 21 Oktober 1980**
**PATENT ABSTRACTS OF JAPAN vol. 9, no. 32 (C-265)(1755) 09 Februar 1985**

(73) Patentinhaber : **HOECHST AKTIENGESELLSCHAFT**
**Postfach 80 03 20**
**W-6230 Frankfurt am Main 80 (DE)**

(72) Erfinder : **Herrmann,W. A., Prof. Dr.**
**Waldweg 10**
**W-8051 Giggenhausen (bei Freising) (DE)**
Erfinder : **Kulpe, Jürgen, Dr. Dipl.-Chem.**
**von-Daller-Strasse 22a**
**W-8050 Freising (DE)**
Erfinder : **Konkol, Werner, Dr. Dipl.-Chem.**
**Lützowstrasse 40a**
**W-4200 Oberhausen 11 (DE)**
Erfinder : **Bach, Hanswilhelm, Dr. Dipl.-Chem.**
**Alleestrasse 56**
**W-4100 Duisburg 11 (DE)**
Erfinder : **Gick, Wilhelm, Dr. Dipl.-Chem.**
**Im Buschhuck 8**
**W-4100 Duisburg 74 (DE)**
Erfinder : **Wiebus, Ernst**
**Ferdinandstrasse 77**
**W-4200 Oberhausen 11 (DE)**
Erfinder : **Müller, Thomas, Dipl.-Ing.**
**Leibnitzstrasse 70**
**W-4630 Bochum (DE)**
Erfinder : **Bahrmann, Helmut, Dr. Dipl.-Chem.**
**Rohstrasse 48**
**W-4236 Brünen (DE)**

**EP 0 352 478 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Trennung von Substanzgemischen, die Metallkomplexverbindungen, elementorganische Liganden und weitere Komponenten in wäßriger oder in wäßrig/organischer Lösung enthalten, durch Gelchromatographie.

Metallkomplexverbindungen werden in technischen Prozessen zunehmend als Katalysatoren verwendet. Wichtige Beispiele für Reaktionen, die durch Komplexverbindungen katalysiert werden, sind Hydrierungen, Hydroformylierungen und Polymerisationen. Die Metallkomplexverbindungen werden hierbei allein, häufig aber auch mit Cokatalysatoren, eingesetzt. In anderen Fällen wendet man sie zusammen mit überschüssigen Liganden an, um ihre Stabilität zu erhöhen.

Als Beispiel für eine durch Metallkomplexverbindungen katalysierte Reaktion sei das in der DE-C- 26 27 354 beschriebene Hydroformylierungsverfahren genannt. Das Katalysatorsystem besteht aus einer wasserlöslichen Rhodiumkomplexverbindung mit einem wasserlöslichen organischen Phosphan als Ligand und überschüssigem, wasserlöslichem Phosphan. Die Wasserlöslichkeit der Phosphanliganden ist auf die Anwesenheit von Sulfonsäuregruppen im Molekül zurückzuführen. Sie gelangen bevorzugt in Form der Alkali-, Ammonium- oder Erdalkalisulfonate zum Einsatz. Der Prozeß zeichnet sich insbesondere durch hohe Selektivität hinsichtlich der Bildung geradkettiger Aldehyde aus. Überdies vermeidet er die Entstehung größerer Mengen hochsiedender Nebenprodukte.

Für die Verwendung als Katalysatoren ist es häufig erforderlich, die reinen Metallkomplexverbindungen bereitzustellen. Daher muß sich dem Herstellungsverfahren vielfach ein Reinigungsprozeß anschließen, der effizient ist und möglichst verlustfrei arbeitet.

Weiterhin sollen ausgebrauchte Katalysatoren auf möglichst einfachem Wege regeneriert und in die aktive Form zurückgeführt werden. So nimmt bei dem in der DE-C- 26 27 354 beschriebenen Hydroformylierungsverfahren im Laufe der Zeit bei kontinuierlicher Arbeitsweise oder bei wiederholtem Einsatz derselben Katalysatorlösung die Wirksamkeit des Katalysatorsystems ab, sehr selektiv geradkettige Aldehyde zu bilden. Dieser Selektivitätsverlust hat verschiedene Ursachen. Zu ihnen gehören Katalysatorgifte wie Eisencarbonyl, das sich durch Einwirkung von Synthesegas auf die Synthesegastransportleitungen oder das Reaktormaterial bildet und höhersiedende Kondensationsprodukte, die aus den Aldehyden entstehen. Selektivitätsmindernd wirkt auch die Abnahme des Verhältnisses von Phosphan zu Rhodium bei längerer Anwendung des Katalysatorsystems, die eine Folge von Abbau- und Oxidationsprozessen ist, denen die sulfonierten Phosphane unterworfen sind. Im Verlauf dieser Reaktionen werden z.B. sulfonierte Phosphanoxide und Phosphansulfide, aromatische Sulfonsäuren und Disulfophenylphosphinsäure, jeweils in Form ihrer Salze, gebildet. Darüber hinaus können sich rhodiumhaltige Clusterverbindungen bilden. Ähnliche Umwandlungs- und Abbaureaktionen werden auch bei Einsatz lipophiler Katalysatorsysteme, sie enthalten als Liganden Arylphosphane, z.B. Triphenylphosphan, beobachtet.

Weder Phosphanoxide und Phosphansulfide noch die Salze aromatischer Sulfonsäuren und der Disulfophenylphophinsäure sind allein oder zusammen mit Rhodium katalytisch wirksam. Das gleiche gilt auch für die Clusterverbindungen des Rhodiums.

Es ist daher zweckmäßig, die mit Spaltprodukten beladene, wäßrige Katalysatorlösung von Zeit zu Zeit insgesamt oder teilweise durch frische Lösung zu ersetzen. Die gebrauchte Katalysatorlösung enthält neben den obengenannten Umwandlungs- und Abbauprodukten der sulfonierten Phosphane Rhodium als Komplexverbindung sowie überschüssiges sulfoniertes Phosphan in Form wasserlöslicher Salze und häufig auch Verunreinigungen, die mit den Reaktanten eingeschleppt werden. Um die Wirtschaftlichkeit des Verfahrens zu sichern, ist es erwünscht, sowohl den Rhodiumkomplex als auch überschüssiges, aktives Phosphan zurückzugewinnen.

Die Reinigung von Metallkomplexverbindungen als Teil des Herstellungsverfahrens und die Regeneration als Katalysatoren verwendeter Metallkomplexverbindungen ist Gegenstand verschiedener Veröffentlichungen.

So wird in der DE-A-32 35 029 ein Verfahren zur Rückgewinnung von Katalysatorsystemen, die wasserlösliche Rhodiumverbindungen, sulfonierte organische Phosphane und Kationen enthalten, beschrieben. Hierbei setzt man der wäßrigen Lösung des Katalysatorsystems zunächst eine den vorhandenen Säuregruppen mindestens äquivalente Menge Säure zu. Darauf wird mit einem Amin, das in einem organischen Lösungsmittel gelöst ist, extrahiert. Die organische Phase, sie enthält das Aminsalz des sulfonierten Phosphans, wird abgetrennt und mit der wäßrigen Lösung einer anorganischen Base, wie NaOH, behandelt. Durch Einstellung eines geeigneten pH-Wertes lassen sich die inaktiven Umwandlungs- und Abbauprodukte des sulfonierten Triarylphosphans entfernen. Man erhält eine wäßrige Lösung von Phosphansulfonat und Rhodiumkomplexverbindung, die unmittelbar oder nach Verdünnung mit Wasser oder nach Zusatz von sulfoniertem Phosphan wieder als Katalysatorlösung eingesetzt werden kann.

Dieses Verfahren liefert stets ein Gemisch aus der Rhodiumkomplexverbindung und dem überschüssigen Liganden. Eine gezielte Trennung von Rhodiumkomplexverbindung und den anderen Komponenten ist nur in begrenztem Maße möglich.

Die DE-A-19 12 380 betrifft ein Verfahren zur Abtrennung von Koordinationskomplexen von Übergangsmetallen aus einem homogenen, fließfähigen Gemisch der Komplexe mit einer oder mehreren organischen Komponenten unter Verwendung von Cellulosemembranen. Diese Arbeitsweise wird u.a. auch zur Abtrennung von Rhodiumkomplexverbindungen aus Gemischen verwendet, die die Umsetzungsprodukte der Hydroformylierung von niederen Olefinen in homogener Phase enthalten. Die Rhodiumkomplexverbindungen sind in Wasser unlöslich, überschüssige Liganden liegen nicht vor. Die Trennaufgabe beschränkt sich darauf, das Gemisch in die Rhodiumverbindung und die übrigen Bestandteile, insbesondere Olefine und Aldehyde, zu zerlegen.

Auch wäßrige Lösungen, die neben anderen Bestandteilen Rhodiumkomplexverbindungen und wasserlösliche Liganden enthalten, können mittels Membranen durch Umkehrosmose oder Ultra- bzw. Mikrofiltration aufgearbeitet werden. Auf diesem Wege lassen sich etwa 50 % der in der Lösung enthaltenen Salze abtrennen, während 99 % des komplexgebundenen Rhodiums zurückgehalten werden.

Ein Nachteil dieser Arbeitsweise ist außer der erforderlichen starken Verdünnung der Einsatzlösung, daß zusammen mit den abgeschiedenen Salzen auch ein Teil der unveränderten Liganden verloren geht. Sie müssen in einem zusätzlichen Verfahrensschritt zurückgewonnen werden.

Obwohl sulfonierte und damit wasserlösliche Phosphane erstmals vor bereits 30 Jahren von Chatt et al, J. Chem. Soc. (1958) 276; ibid. (1958) 1403, als Komplexliganden verwendet wurden, sind Metallkomplexe solcher Liganden bis heute kaum untersucht worden und ihre Herstellung blieb auf wenige Beispiele beschränkt. Die wesentliche Ursache hier- für liegt darin, daß bis heute kein einziges Trenn- und Reinigungsverfahren für wasserlösliche Komplexverbindungen dieses Typs verfügbar war. Aus diesem Grunde konnten sich trotz der Leistungsfähigkeit des in der DE-PS 26 27 354 beschriebenen Hydroformylierungsverfahrens weder weitere technische Prozesse mit sulfonierten Phosphanen als Katalysatorbestandteil etablieren, noch konnte sich die Chemie wasserlösliche Phosphane als Liganden enthaltender Komplexverbindungen entwickeln. Eine Literaturrecherche zeigt diesen Sachverhalt eindrucksvoll.

Wilkinson et al. (Nouv. J. Chim. 2 (1978) 137) berichtet über wasserlösliche Komplexe des Liganden $(C_6H_5)_2P(m\text{-}C_6H_4SO_3Na)$, die jedoch teilweise als Hydrate auftreten und strukturchemisch nicht eindeutig gesichert werden konnten.

Versuche von Patin et al. (Tetrahedron Lett. 28 (1987) 2507) zur Synthese des mit dem bekannten Komplex $ClRh[P(C_6H_5)_3]_3$ formelanalogen Triphenylphosphantrisulfonat-Derivats $ClRh[P\text{-}(C_6H_4\text{-}m\text{-}SO_3Na)_3]$ ergaben ein Gemisch aus mehreren Verbindungen, so daß die Katalyseaktivität der Einzelkomponenten bei der Hydrierung ungesättigter Carbonsäuren nicht definierbar war. Besonders katalyseschädlich scheint die methodisch bedingte Bildung des Phosphanoxids $O{=}P(C_6H_4\text{-}m\text{-}SO_3Na)_3$ zu sein (Patin, l.c. und J. Mol. Catal. 44 (1988) 191).

Eine aktuelle Dissertation mit dem Ziel der Synthese von Organonickel-Komplexen des trisulfonierten Triphenylphosphans scheiterte ebenfalls in Ermangelung einer Methode zur Trennung der Reaktionsprodukte (A. Sivade, Ph. D. Thesis v. 13.11.1987, Université Paul Sabatier Toulouse/Frankreich).

Es bestand daher die Aufgabe ein Verfahren zu entwickeln, das es erlaubt, mit möglichst geringem Aufwand die Bestandteile einer wäßrigen Lösung, die Metallkomplexverbindungen, freie Liganden und weitere Verbindungen enthalt, zu trennen. Dieses Verfahren soll die Reindarstellung z.B. von Metallkomplexverbindungen und elementorganischen Liganden ebenso ermöglichen, wie die Regeneration von Katalysatorsystemen mit Metallkomplexverbindungen als aktiver Komponente.

Die Erfindung besteht in einem Verfahren zur Trennung von Substanzgemischen, die Metallkomplexverbindungen und/oder elementorganische Liganden und/oder Abbauprodukte der Komplexverbindungen und Clusterverbindungen als weitere Komponenten in wäßriger oder wäßrig/organischer Lösung enthalten. Es ist dadurch gekennzeichnet, daß die Trennung der Substanzgemische durch Chromatographie an Wasser beständigen Gelen erfolgt.

Die Gelchromatographie, sie wird auch als Gelpermeations-chromatographie bezeichnet, ist eine insbesondere in der Polymer- und Biochemie angewandte Arbeitstechnik. Sie dient hier zur Trennung von Verbindungen mit hohen Molmassen, z.B. von Polymergemischen, von Proteinen und Sacchariden.

Überraschenderweise hat sich gezeigt, daß die Gelchromatographie auch hervorragend zur Trennung von Verbindungen geeignet ist, deren Molmassen wesentlich niedriger sind, als jene von polymerem und biologischem Material. Besonders bemerkenswert ist, daß selbst Moleküle voneinander getrennt werden, deren Molmassen sich nur geringfügig unterscheiden. Als Beispiel sei die Trennung von sulfoniertem Triphenylphosphan und sulfoniertem Triphenylphosphanoxid genannt (Molmassendifferenz etwa 3 %). Dieser Befund spricht dafür, daß im Gegensatz zum literaturbekannten Prinzip der Gelchromatographie ("size exclusive only") die Trennung nach dem erfindungsgemäßen Verfahren nicht nur entsprechend den Molekülgrößen

erfolgt, sondern daß Substrat/Trägerwechselwirkungen erheblich zur Trennung beitragen.

Ebensowenig war zu erwarten, daß die Komplexverbindungen an der stationären Phase keinen Zersetzungs- und Umwandlungsreaktionen unterliegen. Selbst luft- und wärmeempfindliche Organometallkomplexverbindungen lassen sich nach der neuen Arbeitsweise problemlos reinigen, solche Verbindungen enthaltende Gemische ohne Schwierigkeiten in ihre Bestandteile zerlegen

Als stationäre Feststoffphasen werden nach dem erfindungsgemäßen Verfahren die für die Gelchromatographie gebräuchlichen porösen Materialien eingesetzt. Ihre Auswahl ist allerdings im Gegensatz zu bekannten Anwendungen nicht vorrangig abhängig von der Molmasse bzw. dem Molvolumen der zu trennenden Substanzen, sondern in besonderem Maße vom aufzutrennenden Substanztyp. Grundsätzlich geeignet sind alle Gele, die im wäßrigen Milieu beständig sind. Hierzu gehören beispielsweise Polysaccharide, die gegebenenfalls modifiziert sein können, wie Dextran und Agarose, Kieselgele, Polyethylenglykoldimethylacrylat, mit Divinylbenzol vernetzte Styrolgele, poröses Glas und Polyacrylamide. Geeignet sind vor allem modifizierte organische Polymere. Insbesondere haben sich die mit Epichlorhydrin vernetzten Dextrane (unter dem Namen Sephadex® im Handel) und Oligoethylenglykol/-Glycidyldimethacrylat/-Pentaerithritdimethacrylat-Copolymerisate (unter dem Namen Fractogel® im Handel) bewährt.

Die flüssige Phase dient überwiegend als Transport- oder Laufmittel für die zu reinigenden Stoffe bzw. die aufzutrennenden Substanzgemische. Im allgemeinen sind das Lösungmittel für das Substanzgemisch und das Eluationsmittel gleich. In Sonderfällen kann es sich aber empfehlen unterschiedliche Flüssigkeiten zu verwenden. Geeignet sind Wasser und Gemische aus Wasser und organischen Solventien. Unter den organischen Lösungsmitteln haben sich Hydroxylgruppen enthaltende Verbindungen bewährt, insbesondere niedere Alkohole, d.h. solche mit bis zu 5 Kohlenstoffatome, wie Methanol und Ethanol und ferner Tetrahydrofuran. Die Wahl des geeigneten Lösungsmittels bzw. Lösungsmittelgemisches hängt von der Löslichkeit der zu behandelnden Stoffe ab. Gegebenenfalls muß durch Vorversuche ermittelt werden, welche Lösungsmittel bzw. Lösungsmittelkombinationen Anwendung findet. Nicht außer Betracht zu lassen sind im hier vorgestelltem Spezialfall Solvatationsphänomene; die verwendeten Laufmittel wie Wasser, Methanol können nämlich durch zusätzliche Komplexierung der aufzutrennenden Koordinations- und Komplexverbindungen deren Laufverhalten stark beeinflussen. Solche Effekte sind bei den literaturbekannten Anwendungen der Gelchromatographie unbedeutend.

Einfluß auf die Güte der Trennung haben insbesondere Temperatur und Laufgeschwindigkeit und darüber hinaus die Säulenpackung. Üblicherweise arbeitet man bei Temperaturen im Bereich von 0 bis 95°C, insbesondere 10 bis 50°C und vorzugsweise 15 bis 35°C. Bei Verwendung wäßriger Lösungen als mobiler Phase arbeitet man zweckmäßigerweise bei Temperaturen von 10 und mehr °C, während man bei Anwendung von Lösungsmittelgemischen Temperaturen unter 10°C bevorzugt.

Auch eine Konstanz des Rohrdurchmessers, über die Länge der verwendeten Säulen, ist zur Erzielung einer sauberen Abtrennung der einzelnen Zonen voneinander sehr wichtig.

Unter Laufgeschwindigkeit wird das Volumen Lösung in $cm^3$ verstanden, das je $cm^2$ Säulendurchmesser und Stunde das Gelbett durchströmt. Üblicherweise beträgt die Laufgeschwindigkeit 0,5 bis 40 $cm^3 \cdot cm^{-2} \cdot h^{-1}$. Durch Anwendung von Druck kann sie beträchtlich gesteigert werden. Kleine Laufgeschwindigkeiten in der Größenordnung von 0,5 bis 5 $cm^3 \cdot cm^{-2} \cdot h^{-1}$ verbessern die Trennung der Komponente. Bevorzugt wendet man Laufgeschwindigkeiten von 2 bis 4 $cm^3 \cdot cm^{-2} \cdot h^{-1}$ an.

Wie bereits erwähnt, kann das erfindungsgemäße Verfahren auch unter Druck angewandt werden, obgleich die drucklose Arbeitsweise die bevorzugte Ausführungsform ist. Drücke von 0,5 bis 10 MPa und insbesondere 1 bis 6 MPa sind anwendbar. Voraussetzung für das Arbeiten unter Druck ist der Einsatz von Gelen die druckstabil sind.

Die zu reinigenden oder aufzutrennenden Substanzen werden der stationären Phase in Form von Lösungen zugeführt. Diese Lösungen können außer den zu behandelnden Stoffen und ihren Verunreinigungen weitere anorganische oder organische Verbindungen enthalten. Soll z.B. die Katalysatorphase eines Hydroformylierungsverfahrens gemäß der DE-C- 26 27 354 aufgearbeitet werden, so kann die wäßrige Lösung neben der katalytisch aktiven Komplexverbindung, freiem Liganden und Umwandlungs- und Abbauprodukten der Liganden auch noch Salze wie Natriumchlorid und organische Stoffe wie Aldehye und Alkohole enthalten. Die Konzentration aller gelösten Stoffe kann 10 bis 50 Gew.-% betragen und liegt insbesondere unterhalb 20 Gew.-%. Eine Limitierung erfolgt durch die Viskositäten der zu trennenden Lösungen und ist somit auch lösungsmittelabhängig. Die Viskosität der Lösungen führt auch dazu, daß die Laufgeschwindigkeiten zu Beginn der Trennung gering sind. Erst mit zunehmender Verdünnung der Probe im Verlauf der Chromatographie kann die Laufgeschwindigkeit gesteigert werden.

Die der stationären Phase zugeführte Lösungsmenge ist abhängig vom Säulenvolumen. Es hat sich bewährt, das Lösungsvolumen so zu bemessen, daß es 1 bis 20 % des Volumens der Säule beträgt.

Die nach dem erfindungsgemäßen Verfahren zu reinigenden bzw. aufzutrennenden Komplexverbindungen enthalten elementorganische Liganden und sind in Wasser löslich. Unter dem Begriff elementorganische Liganden werden Arylverbindungen der Elemente Phosphor, Arsen, Antimon und Wismut verstanden. Ihre Wasserlöslichkeit erreichen sie durch Einführen von Sulfonat-($SO_3$-) und/oder Carboxylat-(COO-)-Resten. Dementsprechend lassen sich die elementorganischen Liganden durch folgende allgemeinen Formel wiedergeben.

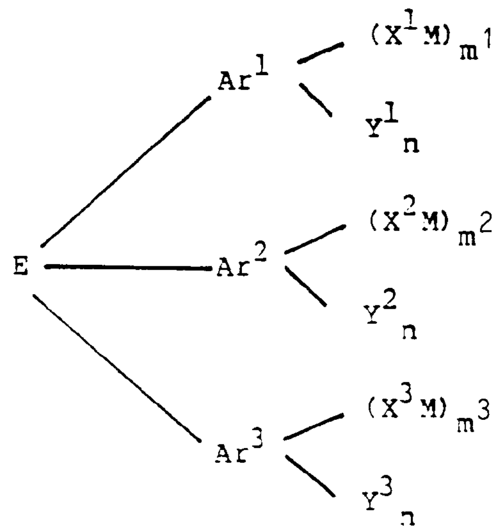

Hierbei bedeuten E die Elemente Phosphor, Arsen, Antimon oder Wismut, $Ar^1$, $Ar^2$, $Ar^3$ jeweils eine Phenyl- oder Naphthylgruppe, $Y^1$, $Y^2$, $Y^3$ jeweils eine geradkettige oder verzweigte Alkylgruppe mit jeweils 1 bis 4 C-Atomen, eine Alkoxygruppe mit jeweils 1 bis 4 C-Atomen, ein Halogenatom, die OH-, CN-, $NO_2$- oder $R^1R^2N$-Gruppe, in der $R^1$ und $R^2$ für geradkettige oder verzweigte Alkylgruppen mit jeweils 1 bis 4 C-Atomen stehen; $X^1$, $X^2$, $X^3$ ist jeweils ein Carboxylat-($COO^-$) und/oder Sulfonat-($SO_3$-)Rest, $n_1$, $n_2$, $n_3$ sind gleiche oder verschiedene ganze Zahlen von 0 bis 5, M ist ein Alkalimetallion, das Äquivalent eines Erdalkalimetall- oder Zinkions oder ein Ammonium- oder quartäres Alkylammoniumion der allgemeinen Formel $N(R^3R^4R^5R^6)^+$, in der $R^3$, $R^4$, $R^5$ $R^6$ jeweils für eine geradkettige oder verzweigte Alkylgruppe mit 1 bis 18 C-Atomen steht. Bewährt haben sich insbesondere quaternäre Ammoniumgruppen, in denen drei der Reste $R^3$, $R^4$, $R^5$, $R^6$ jeweils 1 bis 4 und der vierte Rest 1 bis 18 Kohlenstoffatome enthält. $m^1$, $m^2$, $m^3$ sind gleiche oder verschiedene ganze Zahlen von 0 bis 3, wobei mindestens eine Zahl $m^1$, $m^2$ oder $m^3$ gleich oder größer als 1 ist.

Die Komplexverbindungen leiten sich von Metallen der sog. Nebengruppen (Gruppen 3 - 12) des Periodensystems der Elemente ab. Außer den elementorganischen Liganden können sie noch weitere Komplexbestandteile enthalten. Beispiele für derartige Liganden sind: CO, $CO_2$, $C_2H_4$, HC=CH, $S_x(x \geqq 1)$, Halogen, NO.

Das erfindungsgemäße Verfahren kann sowohl im Labor als auch im Technikums- bzw. Betriebsmaßstab eingesetzt werden. In der Praxis verwendet man als Reaktoren, in denen das Gel auf durchströmbaren Böden angeordnet ist, Säulen, insbesondere solche aus Glas oder Plexiglas. Die Säulenlänge ist nur nach unten beschränkt. Sie beträgt mindestens 5 cm, vorzugsweise zwischen 60 und 120 cm. Inhomogenitäten der Säulenfüllung bei langen Säulenkörpern können durch Auftrennung einer einzigen großen Säule in hintereinandergeschaltete kurze Einzelsäulen überwunden werden. Der Säulenquerschnitt kann frei gewählt werden und liegt für Laborversuche vorzugsweise zwischen 0,5 und 10 cm. Bei industrieller Anwendung sind Durchmesser von 1 m und mehr technisch beherrschbar.

Die Gelchromatographie erlaubt eine Fraktionierung der gelösten Stoffe nach Molmassen. Wie bereits weiter oben gesagt wurde, dürften Wechselwirkungen der Komplexliganden mit reaktiven Gruppen (wie Carboxyl-, Hydroxylgruppen) der Gele an der Trennung von Substanzgemischen nach dem erfindungsgemäßen Verfahren in erheblichem Umfang beteiligt sein. Daher ist es möglich, die gewünschten Lösungsbestandteile auch dann sehr scharf voneinander zu trennen, wenn dies durch reine Ausschlußeffekte nicht zu erwarten wäre.

Bei Einsatz ausgebrauchter, wäßriger Katalysatorlösungen lassen sich die katalytisch aktive Komplexverbindung und der überschüssige Ligand frei von Fremdbestandteilen abtrennen und in den Katalysatorkreislauf zurückführen. Das erfindungsgemäße Verfahren eignet sich daher im technischen Maßstab insbesondere für einen kontinuierlichen Betrieb. Hierbei wird einem Seitenstrom des Katalysatorkreislaufs die zu regenerierende prozeßschädliche Abbauprodukte enthaltende Katalysatorlösung entnommen. Zur Aufbereitung führt man sie einer aus einer oder mehreren Säulen bestehenden Trenneinheit zu. Die Säulen sind mit Gel als stationäre

Phase und mit Wasser gefüllt. Durch geeignete Maßnahmen wie Rückspülen und Evakuieren wird das Gel von anhaftender Luft befreit. Nach Beladung der ersten einer, aus mehreren Säulen bestehenden, Trenneinheit wird automatisch auf die nächste und nacheinander auf die folgenden Säulen umgeschaltet. Die mit der Katalysatorlösung beladenen Säulen werden zur Trennung der Lösungsbestandteile mit Wasser eluiert. Die, den katalytisch aktiven Komplex und/oder freie Liganden enthaltenden Fraktionen werden über eine Sammelleitung, gegebenenfalls unter erhöhtem Druck, in den katalytischen Prozeß rezirkuliert. Im allgemeinen ist es nicht erforderlich die Trennsäulen vor einem neuen Regenerationszyclus mit Waschwasser zu behandeln. Insgesamt lassen sich die Mengen Eluationswasser und Waschwasser, sofern es anfällt, die wiederum im Prozeß eingesetzt werden, so bemessen, daß sie der mit dem Produkt ausgetragenen Wassermenge entsprechen. Das Verfahren gestattet nicht nur die Abtrennung prozeßschädlicher Abbauprodukte, sondern auch die Entfernung aktivitätsmindernder Cluster-Verbindungen.

Die Detektion der aufgetrennten Komponenten erfolgt in bekannter Weise, im einfachsten Fall mittels einer UV-Fluoressenzlampe, im automatisierten Betrieb vorzugsweise durch wellenlängenvariable UV-Spektroskopie, Refraktometrie und Infrarot-Spektrokopie. Die letztgenannte Detektionsmethode ist bei Kohlenmonoxid-Komplexen besonders erfolgreich, da solche Komplexe sehr intensive CO-Streckschwingungsbanden aufweisen.

Die nachfolgenden Beispiele veranschaulichen das erfindungsgemäße Verfahren. Es ist selbstverständlich nicht beabsichtigt, die Erfindung auf diese speziellen Ausführungsformen zu beschränken.

Die in den Beispielen verwendeten Abkürzungen haben die nachstehenden Bedeutungen:

| | |
|---|---|
| TPPTS | Tri-Natrium-triphenylphosphantrisulfonat |
| TPPDS | Di-Natrium-triphenylphosphandisulfonat |
| TPPOTS | Tri-Natrium-triphenylphosphanoxidtrisulfonat |
| TPPODS | Di-Natrium-triphenylphosphanoxiddisulfonat |
| TPPSTS | Tri-Natrium-triphenylphosphansulfidtrisulfonat |

Beispiel 1: Trennung der Bestandteile einer gebrauchten Katalysatorlösung

In diesem Beispiel wird die Aufbereitung einer wäßrigen Lösung beschrieben, die neben anderen Bestandteilen, eine Rhodiumcarbonyl-Komplexverbindung, wasserlösliche Phosphane, insbesondere TPPTS als freie Liganden und Umwandlungsprodukte dieser Liganden enthält. Die Lösung war als Katalysator bei der Hydroformylierung von Olefinen eingesetzt worden.

Als stationäre Phase wird Sephadex G-15® verwendet, das zuvor mit entgastem, stickstoffgesättigtem Wasser behandelt wurde. Das Gel wird als Packung von 95 cm Länge in einer Säule mit 40 mm Durchmesser angeordnet. Es werden 100 ml Lösung aufgetragen. Die Eluation erfolgt mit Wasser, der Lösungsmittelfluß beträgt 21 $cm^3 \cdot cm^{-2} \cdot h^{-1}$. Man erhält 4 Fraktionen, deren Retentionszeiten in Tabelle 1 aufgeführt sind. Die Retentionszeiten geben die Maxima der Absorption bei $\lambda$ = 330 nm wieder.

Tabelle 1

| Fraktion | Retentionszeit (min) |
|---|---|
| 1 | 295 |
| 2 | 477 |
| 3 | 577 |
| 4 | 603 |

Die Fraktionen werden durch $^{31}$Phosphor-NMR-Spektroskopie, Felddesorptionsmassenspektrometrie (Messung des negativen Ionenstromes) und HPLC-Analyse charakterisiert.

In der Fraktion 4 findet sich wasserlösliches Phosphan, in der Fraktion 3 treten wasserlösliches Phosphanoxid und weitere P(V)-Verbindungen auf. Die Fraktion 2 enthält neben geringen Mengen wasserlöslichen Phosphans den katalytisch aktiven Komplex $H(CO)Rh(TPPTS)_3$. Weitere Rhodium-Phosphan-Komple-

xe sind in der Fraktion 1 enthalten, wie die NMR-spektroskopische Untersuchung beweist (Kopplung des Rhodiums zum Phosphorkern).

Beispiel 2

Beispiel 1 wird wiederholt, jedoch werden 150 ml Lösung aufgetragen und der Lösungsmittelfluß wird auf 32 $cm^3 \cdot cm^{-2} \cdot h^{-1}$ erhöht. Auch unter diesen, gegenüber Beispiel 1 verschärften Bedingungen gelingt es nach dem neuen Verfahren die Lösungsbestandteile einwandfrei zu trennen.

Tabelle 2

| Fraktion | Retentionszeit (min) |
|---|---|
| 1 | 131 |
| 2 | 229 |
| 3 | 261 |
| 4 | 293 |

Die erhaltenen Fraktionen sind mit denen aus Beispiel 1 spektroskopisch identisch.

Beispiel 3: Reindarstellung von $ClRh(TPPTS)_3$

Zur Herstellung der Verbindung $ClRh(TPPTS)_3$ wird $RhCl_3$ $3H_2O$, gelöst in Wasser mit überschüssigem TPPTS, das ebenfalls in Wasser gelöst ist, umgesetzt. Hierbei wird Rh(III) durch das Phospan, das in das entsprechende Phosphanoxid übergeht, zu RhI) reduziert. Daneben enthält das Reaktionsprodukt auch in geringen Mengen Phosphansulfid. Zur Entfernung des überschüssigen TPPTS und der Nebenprodukte TPPOTS und TPPSTS werden 10 ml der Reaktionslösung (die etwa 3 g TPPTS, 1,2 g TPPOTS und wenig TPPSTS enthält) in der in Beispiel 1 beschriebenen Säule behandelt. Die Rhodiumkomplexverbindung wird bei einem Lösungsmittelfluß von 7 $cm^3 \cdot cm^{-2} \cdot h^{-1}$ nach einer Retentionszeit von 424 min (Absorption bei $\lambda$ = 330 nm) in reiner Form eluiert.

Beispiel 4: Trennung einer $H(CO)Rh(TPPTS)_3$ enthaltenden Lösung

In diesem Beispiel wird die Trennung einer wässrigen Lösung, die den Rhodiumkomplex $H(CO)Rh(TPPTS)_3$, ferner NaCl, NaOH, TPPTS, TPPDS, TPPOTS, TPPODS sowie Formaldehyd enthält, in ihre Komponenten beschrieben. Der Trockenrückstand der Lösung beträgt 200 mg . $cm^{-3}$.

a) Bei Verwendung einer mit Sephadex G-25-Superfine® gepackten Säule von 60 cm Länge (Länge der Gelpackung: 25,5 cm) und 2 cm Durchmesser erhält man bei Aufgabe von 1 $cm^3$ Probelösung und einem Lösungsmittelfluß von 2,8 $cm^3 \cdot cm^{-2} \cdot h^{-1}$ den reinen Komplex nach einer Retentionszeit von 353 min. Die niedermolekularen Verbindungen werden nach 572 min eluiert (diese Angaben beziehen sich auf die Maxima der UV-Absorption bei $\lambda$ = 473 nm).

b) 2 $cm^3$ der in Beispiel 4a) eingesetzten Lösung werden in einer mit Fractogel TSK HW 40 fine® gepackten Säule von 120 cm Länge (Länge der Gelpackung 91,5 cm) und 2,4 cm Durchmesser behandelt. Bei einem Lösungsmittelfluß von 4,5 $cm^3 \cdot cm^{-2} \cdot h^{-1}$ erhält man den reinen Komplex nach einer Retentionszeit von 505 min, die niedermolekularen Verbindungen werden nach 675 min eluiert (diese Angaben beziehen sich auf die Maxima der UV-Absorption bei $\lambda$ = 340 nm).

Beispiel 5: Reindarstellung von TPPTS

Das Beispiel zeigt die Anwendbarkeit des neuen Verfahrens zur Reinigung von Substanzen bei sehr hohem Lösungmittelfluß.

Eingesetzt wird die bei der Herstellung von TPPTS durch Sulfonierung von Triphenylphosphin mit Oleum erhaltene wäßrige Lösung. Sie enthält etwa 28 Gew.-% TPPTS, 2,5 Gew.-% TPPDS sowie die entsprechenden Phosphanoxide, Phosphansulfide und in geringen Mengen weitere von der Sulfonierung herrührende Verunreinigungen.

Zur Gewinnung des reinen TPPTS werden 50 $cm^3$ der Lösung auf die in Beispiel 1 beschriebene Säule aufgegeben. Der Lösungsmittelfluß beträgt 54 $cm^3 \cdot cm^{-2} \cdot h^{-1}$. Man erhält 5 Fraktionen, die zusammen mit

ihren Retentionszeiten in Tabelle 3 aufgeführt sind.

Tabelle 3

| Fraktion | Retentionszeit (min) |
|---|---|
| 1 | 85 |
| 2 | 123 |
| 3 | 159 |
| 4 | 201 |
| 5 | 268 |

Die Fraktionen werden wie die Ausgangslösung durch HPLC-Analyse und $^{31}P$-NMR-Spektroskopie untersucht. Trotz des hohen Lösungsmittelflusses wird TPPTS als Fraktion 4 in einer Reinheit von mehr als 95 % erhalten (Die Reinheitsbestimmung erfolgt durch Analyse mittels NMR und HPLC). Besonders bemerkenswert ist in diesem Zusammenhang, daß das TPPTS frei von dem entsprechenden Phosphanoxid ist, dessen Entfernung nach dem bekannten Verfahren nicht oder nur unzureichend möglich ist.

## Patentansprüche

1. Verfahren zur Trennung von Substanzgemischen, die Komplexverbindungen von Metallen der Nebengruppen (Gruppen 3 bis 12) des Periodensystems und/oder elementorganische Liganden und/oder Abbauprodukte der Komplexverbindungen und Clusterverbindungen als weitere Komponenten in wäßriger oder wäßrig-organischer Lösung enthalten, dadurch gekennzeichnet, daß die Trennung der Substanzgemische durch Chromatographie an Wasser beständigen Gelen erfolgt.

2. Verfahren nach Anspruch 1 dadurch gekennzeichnet, daß als Gele mit Epichlorhydrin vernetzte Dextrane verwendet werden.

3. Verfahren nach Anspruch 1 dadurch gekennzeichnet, daß als Gele Oligoethylenglykol/-Glycidyldimethacrylat/Pentaerithritdimethacrylat-Copolymerisate verwendet werden.

4. Verfahren nach einem oder mehreren der Ansprüche 1 bis 3 dadurch gekennzeichnet, daß die Substanzgemische in Gemischen aus Wasser und einem niederen Alkohol mit bis zu 5 Kohlenstoffatomen gelöst sind.

5. Verfahren nach Anspruch 4 dadurch gekennzeichnet, daß der niedere Alkohol Methanol oder Ethanol ist.

6. Verfahren nach einem oder mehreren der Ansprüche 1 bis 5 dadurch gekennzeichnet, daß die Trennung des Substanzgemisches bei Temperaturen von 0 bis 95 °C, insbesondere 10 bis 50 °C, vorzugsweise 15 bis 35 °C erfolgt.

7. Verfahren nach einem oder mehreren der Ansprüche 1 bis 6 dadurch gekennzeichnet, daß die Trennung des Substanzgemisches mit einer Laufgeschwindigkeit des Lösungsmittels von 0,5 bis 40 $cm^3 . cm^{-2} . h^{-1}$, vorzugsweise 1 bis 5 $cm^3 . cm^{-2} . h^{-1}$ und insbesondere 2 bis 4 $cm^3 . cm^{-2} . h^{-1}$ erfolgt.

8. Verfahren nach einem oder mehreren der Ansprüche 1 bis 7 dadurch gekennzeichnet, daß die Trennung des Substanzgemisches bei Drücken von 0,5 bis 10, vorzugsweise 1 bis 6 MPa erfolgt.

## Claims

1. A process for separating mixtures of substances containing complex compounds of metals of the subgroups (groups 3 - 12) of the Periodic System and/or organoelemental Ligands and/or decomposition

products of these complex compounds and cluster compounds as further components in an aqueous or aqueous-organic solution, characterised in that the mixtures of substances are separated by chromatography on water-resistant gels.

2. A process according to claim 1, characterised in that dextrans cross-linked with epichlorohydrin are used as gels.

3. A process according to claim 1, characterised in that oligoethylene glycol-glycidyldimethacrylatepentaerythritol dimethacrylate copolymers are used as gels.

4. A process according to one or more of the claims 1 to 3, characterised in that the mixtures of substances are dissolved in mixtures of water and a low alcohol with up to 5 carbon atoms.

5. A process according to claim 4, characterised in that the low alcohol is methanol or ethanol.

6. A process according to one or more of the claims 1 to 5, characterised in that the mixture of substances is separated at temperatures of 0 to 95°C, in particular 10 to 50°C, preferably 15 to 35°C.

7. A process according to one or more of the claims 1 to 6, characterised in that the mixture of substances is separated at a solvent flow rate of 0.5 to 40 $cm^3 \times cm^{-2} \times h^{-1}$, preferably 1 to 5 $cm^3 \times cm^{-2} \times h^{-1}$ and in particular 2 to 4 $cm^3 \times cm^{-2} \times h^{-1}$.

8. A process according to one or more of the claims 1 to 7, characterised in that the mixture of substances is separated at pressures of 0.5 to 10, preferably 1 to 6 MPa.

## Revendications

1. Procédé pour séparer des mélanges de substances contenant, en solution aqueuse ou hydro-organique, des complexes des métaux des sous-groupes (groupes 3 à 12) de la Classification Périodique et/ou des ligands organiques d'éléments, et/ou des produits de dégradation des complexes et des composés en essaim en tant qu'autres composants, caractérisé en ce que l'on sépare ces mélanges de substances par chromatographie sur des gels stables à l'eau.

2. Procédé selon la revendication 1, caractérisé en ce que l'on utilise en tant que gels des dextranes réticulés par l'épichlorhydrine.

3. Procédé selon la revendication 1, caractérisé en ce que l'on utilise en tant que gels des copolymères oligo-éthylèneglycol/diméthacrylate de glycidyle/diméthacrylate du pentaérythritol.

4. Procédé selon une ou plusieurs des revendications 1 à 3, caractérisé en ce que les mélanges de substances sont dissous dans des mélanges d'eau et d'un alcool inférieur contenant jusqu'à 5 atomes de carbone.

5. Procédé selon la revendication 4, caractérisé en ce que l'alcool inférieur est le méthanol ou l'éthanol.

6. Procédé selon une ou plusieurs des revendications 1 à 5, caractérisé en ce que l'on sépare les mélanges de substances à des températures de 0 à 95°C, plus spécialement de 10 à 50°C et de préférence de 15 à 35°C.

7. Procédé selon une ou plusieurs des revendications 1 à 6, caractérisé en ce que l'on sépare les mélanges de substances à une vitesse d'écoulement du solvant qui est de 0,5 à 40 $cm^3.cm^{-2}.h^{-1}$, de préférence de 1 à 5 $cm^3.cm^{-2}.h^{-1}$ et plus spécialement de 2 à 4 $cm^3.cm^{-2}.h^{-1}$.

8. Procédé selon une ou plusieurs des revendications 1 à 7, caractérisé en ce que l'on sépare les mélanges de substances à des pressions de 0,5 à 10, de préférence de 1 à 6 MPa.